# EUROPÄISCHE PATENTSCHRIFT

(11) **EP 0 939 704 B1**
(45) Veröffentlichungstag und Bekanntmachung des Hinweises auf die Patenterteilung: **23.10.2002**
(21) Anmeldenummer: 98958168.1
(22) Anmeldetag: 19.09.1998
(51) Int. Cl.: B60J 10/00, B62D 65/00

(54) **VERFAHREN UND VORRICHTUNG ZUM ANBRINGEN VON DICHTPROFILEN AUF DEN RANDBEREICH EINER ÖFFNUNG**
PROCESS AND DEVICE FOR MOUNTING SEALING PROFILES ON THE EDGE OF AN OPENING
PROCEDE ET DISPOSITIF POUR LE MONTAGE DES PROFILES D'ETANCHEITE SUR LE BORD D'UNE OUVERTURE

(30) Priorität: 25.09.1997 DE 19742257
(43) Veröffentlichungstag der Anmeldung: 08.09.1999
(73) Patentinhaber: SAAR-GUMMIWERK GmbH, 66687 Wadern (DE)
(72) Erfinder: FLAUSS, Hasso, D-66606 St Wendel (DE); SEHR, Ralf, D-66679 Losheim (DE)
(74) Vertreter: Schulte, Jörg, Dipl.-Ing.
(86) Internationale Anmeldenummer: DE9802849
(87) Internationale Veröffentlichungsnummer: WO99015353

(56) Entgegenhaltungen:
- EP-A- 0 261 297
- EP-A- 0 689 031
- EP-A- 0 778 172

## Beschreibung

Die Erfindung betrifft ein Verfahren zum Anbringen von Dichtprofilen auf den Randbereich einer Öffnung, insbesondere eines Profilschlauches auf den Flansch zusammengepresster Karosserieteile eines Kraftfahrzeuges, wobei der Profilschlauch mit seinen innenseitig vorstehenden Lippen auf den Flansch, dessen genaue Kontur unmittelbar vor dem Andrücken gemessen wird, unter Berücksichtigung der Messergebnisse gezielt aufgesteckt und an ihn angeformt wird. Die Erfindung betrifft außerdem eine Vorrichtung zum Anbringen von Dichtprofilen auf den Flansch von Karosserien mit einer Robotereinheit, die entlang des Flansches verfahrbar ist und über eine das Dichtprofil beeinflussende Druckrolle und eine dieser vorgeordneten, mit verfahrbaren, elektrisch/elektronischen Flanschabtasteinrichtung verfügt.

Derartige Montageverfahren werden vor allem im Personenkraftwagenbaubereich eingesetzt, um die im Bereich der Öffnungen verbleibenden Flansche benutzerfreundlich einzufassen bzw. um auch Fenster o. ä. entsprechend abgedichtet einsetzen zu können. Die auf diese Flansche aufgebrachten Dichtprofile werden umklammernd darauf angebracht und umgreift die Flansche, sodass diese abgedeckt und geschützt sind und gleichzeitig die Insassen des Fahrzeuges nicht beeinträchtigen können. Bekannt sind sogenannte Rollforming-Systeme, bei denen das Gummi-/Metallteil des Profilschlauches zunächst von Hand auf den Flansch aufgedrückt und dann mit einem Handgerät verformt wird. Die Positionierung muss umlaufend immer wieder neu ausgeführt werden, sodass ein optimaler Sitz der Dichtprofile von der Geschicklichkeit des jeweiligen Arbeiters abhängt. Besonders kritisch ist dieses System zu bewerten, wenn es sich um sehr enge Radien handelt. Aus der DE-OS 44 11 433 ist es bekannt, diesen Klemmund Führungsvorgang über einen Automaten vorzunehmen, wobei der Profilschlauch zunächst von Hand auf den Flansch aufgesteckt werden muss. Mit Hilfe des Automaten wird dann der Träger bzw. eine Seite des U-förmigen Trägers an den Flansch durch eine Anpressvorrichtung angeformt. Zusätzlich zu der Anpressvorrichtung, hier eine Quetschrolle, sind Antriebs- und Führungsrollen vorgesehen, wobei es auch hier letztlich wieder auf die Geschicklichkeit des jeweiligen Arbeiters ankommt. Eine Überwachung des jeweilig genauen Sitzes des Dichtprofils ist weder während noch nach Montage möglich. Die EP-A1-0 778 172 beschreibt ein Verfahren und eine Vorrichtung, mit der das Andrücken über einen Automaten erfolgt, wobei ein genaues Aufrollen des Dichtprofils dadurch erreicht wird, dass der eigentlichen Montagerolle eine Flanschabtasteinrichtung in Form einer Führungsrolle vorgeordnet ist. Über diese Führungsrolle wird die genaue Position und ggf. auch die Ausbildung des jeweiligen Flansches ermittelt, also dass die Druckrolle jeweils genau dem jeweiligen Flansch entsprechend geführt werden kann. Die Flanschabtasteinrichtung arbeitet rein mechanisch über eine Führungsrolle oder auch elektrisch/elektronisch, um so nicht nur Richtungsänderungen, sondern auch andere Veränderungen des Flansches erfassen und mitberücksichtigen zu können. Damit wird ein schonendes und genau auf die Ausbildung bzw. Anordnung des Flansches gerichtete Aufbringung des Dichtprofiles erreicht. Allerdings muss eine derartige Führungsrolle als Flanschabtasteinrichtung aufwendig ausgerüstet sein, zumal sie wie erwähnt, nicht nur die Richtung, sondern auch die jeweilige Form des Flansches ermitteln und berücksichtigen soll. Damit ist nur eine begrenzte Umlaufgeschwindigkeit und damit eine verhältnismäßig ungünstige Taktzeit zu erreichen.

Der Erfindung liegt daher die Aufgabe zugrunde, ein Verfahren und eine Vorrichtung zu schaffen, die eine Verkürzung der Taktzeiten beim Anbringen von Dichtprofilen sowie eine schnelle Korrektur bei vorhandenen Abweichungen am Flansch ermöglichen.

Die Aufgabe wird gemäß Verfahren dadurch gelöst, dass zunächst aufgrund der im Computer hinterlegten Sollbahn-Stützpunkte die Lage der Karosserie ermittelt und dann die tatsächliche Kontur zwischen diesen Stützpunkten abgefahren und berührungslos aufgenommen und als Korrekturwert den Solldaten überlagert und die Sollbahn entsprechend verschoben wird, wobei während des Abfahrens der Kontur automatisch neben den Korrekturwerten zusätzliche Stützpunkte durch Einsatz von drei Laser-Abtastsensoren bestimmt werden.

Mit Hilfe eines derartigen Verfahrens ist es überraschend möglich, Bahngeschwindigkeiten von 100 mm/Sek. zu erreichen und dabei Bauteilabweichungen von ± 4 mm sicher zu erfassen und zu berücksichtigen, sodass die nachfolgende Druckrolle entsprechend arbeitend geführt werden kann. Dabei wird zunächst einmal über die Robotereinheit die Position der Korrektur ermittelt, in der Regel durch Abtasten von zwei Messpunkten, um dann in die komplette Einheit entsprechend an der Karosserie bzw. der Kante dem Flansch entlang zu führen und dabei den Dichtschlauch so gezielt aufzubringen, dass ein optimaler Sitz gewährleistet ist. Es kann durch große Bauteilabweichungen damit nicht zu irgendwelchen Schäden kommen, wobei man davon ausgehen muss, dass die Bauteilabweichungen ± 4 mm betragen und durch Robotereinheit auf eine Abweichung von ± 1 mm reduziert werden. Eine derartige Abweichung kann Probleme beim Aufbringen und auch beim späteren Sitz des Profilschlauches bzw. Dichtschlauches nicht ergeben. Da in aller Regel Bauteilabweichungen durch immer gleiche Handhabung bei der Montage der Karosserie auftreten, ist es von Vorteil, wenn sie gespeichert und Grundlage für die Sollbahn werden. Dementsprechend erüberigt es sich dann, bei weiterem Einsatz der Robotereinheit die Sollbahn entsprechend zu verändern, vielmehr wird sie automatisch so geändert, dass die Robotereinheit sie beim Andrücken des Profilschlauches auf den Flansch durch die Druckrolle berücksichtigt. Durch die Aufnahme mehrerer Stützpunkte ist es möglich, eventuell schon bei der Positionierung der Robotereinheit mit der Abtastung eines Messpunktes auszukommen, da er dann anhand dieses ermittelten Stützpunktes auf die übrigen Stützpunkte rückschließen und entsprechend arbeiten kann.

Nach einer zweckmäßigen Ausbildung der Erfindung ist vorgesehen, dass die Postition der Öffnung bzw. der Karosserie vorab durch separate Sensorik ermittelt wird, um so der eigentlichen Robotereinheit die einfache Erkennung der Karosserieposition innerhalb eines kleinen Toleranzfensters zu ermöglichen. Hierdurch kann die Taktzeit weiter optimiert werden.

Ebenfalls zur Sicherung einer hohen Geschwindigkeit von mind. 100 mm/Sek. dient eine Ausbildung des Verfahrens, nach dem auch die Position der Werkzeuge, insbesondere der Druckrolle, während des Abtastens kontinuierlich korrigiert wird. Durch entsprechend schnelle Berücksichtigung der Messdaten kann so das Werkzeug rechtzeitig in die Position gebracht werden, die es benötigt, um die auftretenden Sollbahnabweichungen zu berücksichtigen und damit den Profil- bzw. Dichtschlauch genau zu positionieren und aufzupressen.

Weiter vorn ist bereits erwähnt worden, dass mit Hilfe des erfindungsgemäßen Verfahrens die Möglichkeit gegeben ist, die beim Anbringen des Profil- bzw. Dichtschlauches ermittelten Sollbahnabweichungswerte zu speichern und bei der Karosseriefertigung zu benutzen. Dementsprechend sieht die Erfindung vor, dass die Werte der Konturmessung gespeichert und in die Karosseriefertigung als Korrekturwerte eingeschleust werden, sodass nach und nach immer weniger Sollbahnabweichungen auftreten, sodass die Bahngeschwindigkeit der Robotereinheit wesentlich erhöht werden kann.

Eine weitere Rationalisierung im Herstellerwerk ist dadurch erreichbar, dass der die Laser-Abtastsensoren und die Montagemechanik der auf einem Transportband angeordneten Karosserie kontinuierlich folgend und auf einem verfahrbaren Gestell gelagert werden. Dieses verfahrbare Gestell fährt in einer Geschwindigkeit oder Geschwindigkeitsabfolge, die es der Robotereinheit ermöglicht, unter Einsatz der Laser-Abtastsensoren und der übrigen Mechanik ohne Stillstand des Transportbandes oder Veränderung seiner Geschwindigkeit die Profil- bzw. Dichtschläuche kontinuierlich anzubringen. Dies führt zu einer deutlichen Verkürzung der Montagezeiten und ist deshalb besonders wichtig.

Zur Durchführung des Verfahrens dient eine Vorrichtung mit einer Robotereinheit, die entlang des Flansches verfahrbar ist und über eine das Dichtprofil beeinflusste Druckrolle und eine dieser vorgeordneten, mit verfahrbaren, elektrisch/elektronischen Flanschabtasteinrichtung verfügt, wobei die der Robotereinheit zugeordnete Flanschabtasteinrichtung von drei Laser-Abtastsensoren gebildet ist, die mit der Auswerteinheit und die wieder mit der Robotereinheit und deren Druckrolle steuerungsmäßig verbunden ist. Mit Hilfe einer derartigen Vorrichtung kann berührungslos gearbeitet werden, was mehrere Vorteile hat, insbesondere aber einfacher im Aufbau ist, als eine entsprechend ausgerüstete Führungsrolle gemäß Stand der Technik. Die von den Laser-Abtastsensoren ermittelten Werte werden unmittelbar auf die Robotereinheit bzw. deren Druckrolle übergeben, sodass diese sich den Änderungen entsprechend stellen und bewegen kann. Ein einwandfreies Aufbringen der Dichtprofile ist so sichergestellt, ganz davon abgesehen, dass der gesamte Vorgang deutlich beschleunigt wird. Die zum Einsatz kommenden Laser-Abtastsensoren sind besonders vorteilhaft, weil ein exakter Schaltpunkt problemlos einstellbar ist und weil sie durch den sichtbaren Lichtfleck genau und einfach justiert werden können. Vorteilhaft ist weiter, dass die Laser-Abtaster schnell und exakt reagieren, wobei der Durchmesser des Lichtblicks < 1 mm ist. Versuche haben ergeben, dass die gewünschte Geschwindigkeit von 100 mm/Sek. sicher erreichbar ist, sodass ein kompletter Türausschnitt beispielsweise in einer Zeit von deutlich unter 30 Sek. abgefahren und entsprechend mit einem Dichtprofil ausgerüstet werden kann.

Zur Optimierung der Taktzeit ist es von Vorteil, wenn der Flanschabtasteinrichtung und/oder der Robotereinheit ein die Korosserieposition ermittelnder seperater Sensor zugeordnet ist. Über diesen Sensor wird vorab die Position der Karosserie ermittelt und an den Roboter weitergegeben, sodass dieser ohne weitere Vorbereitung sofort mit dem Aufrollen des Dichtprofils beginnen kann.

Durch die schräge Montage eines Laser-Abtastsensors besteht die Gefahr, dass Verfälschungen auftreten. Dies wird dadurch verhindert, dass einer der Laser-Abtastsensoren als Lichtschranke die Kontur des Flansches senkrecht abtastend ausgebildet und angeordnet ist. Damit ist eine solche Fehlerquelle sicher ausgeschlossen, was zu einer besonders optimalen Führung der Robotereinheit beiträgt.

Ein Stillstand des Transportbandes, auf dem die Karosserie nach und nach zu einem Auto vervollständigt wird, kann gemäß der Erfindung verhindert werden, wenn die Robotereinheit mit dem die Karosserie mitnehmenden Transportband und an diesem längsverfahrbar ausgebildet ist. Dabei muss die Robotereinheit zwangsweise aufgrund des Verfahrweges der Druckrolle mal eine höhere Geschwindigkeit als das Transportband erreichen, mal eine geringere, mal muss sie auch stillstehen. Diese Ausbildung ist für eine Robotereinheit aber vom Prinzip her kein Problem, selbst wenn beispielsweise Türen und Fenster unterschiedliche Wege für die Robotereinheit bzw. die Druckrolle vorgeben.

Aufgrund des Einsatzes der Laser-Abtastsensoren und der sonstigen Ausbildung der erfindungsgemäßen Vorrichtung kann diese insgesamt wesentlich vereinfacht werden. Dementsprechend sieht die Erfindung vor, dass die Robotereinheit eine Druckrolle mit Seitenführung für das Dichtprofil aufweist, der lediglich das Umschlingen der Druckrolle sichernde Umlenkrollen zugeordnet sind. Es kann auf eine Führungsrolle in dem Sinne letztlich verzichtet werden, wenn die Umlenkrollen entsprechend angeordnet und ausgebildet sind. Sie sorgen nämlich für eine genaue Zuführung des jeweiligen eine endlose Einheit darstellenden Dichtprofils.

Die Erfindung zeichnet sich insbesondere dadurch aus, dass ein Verfahren und eine Vorrichtung geschaffen sind, mit deren Hilfe bei der Montage von Autokarosserien die notwendigen Dichtprofile schnell und sicher und so angebracht werden, dass sie auch bei Fehlern am jeweiligen Flansch immer den optimalen Sitz erreichen. Dieses Anbringen des Sichtprofils bzw. Profilschlauches wird in kurzen Taktzeiten erreicht, weil aufgrund der sichernden, berührungslosen Abtastung des jeweiligen Flansches der gesamte Andrückvorgang mit hoher Geschwindigkeit vollzogen werden kann. Die dafür notwendige Mechanik ist verhältnismäßig einfach, insbesondere wenn drei Laser-Abtastsensoren zum Einsatz kommen, die so positioniert werden, dass sie eine einwandfreie Erkennung und Vermessung der Kante bzw. der Ausbildung des Flansches möglich machen.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Fig. 1: eine vereinfachte Darstellung einer Robotereinheit, über die ein Dichtprofil auf den rundumlaufenden Flansch aufgedrückt wird,
- Fig. 2: eine vergrößerte Darstellung der Robotereinheit mit Druckrolle und
- Fig. 3: eine vereinfachte Darstellung der Anordnung der Abtastsensoren.

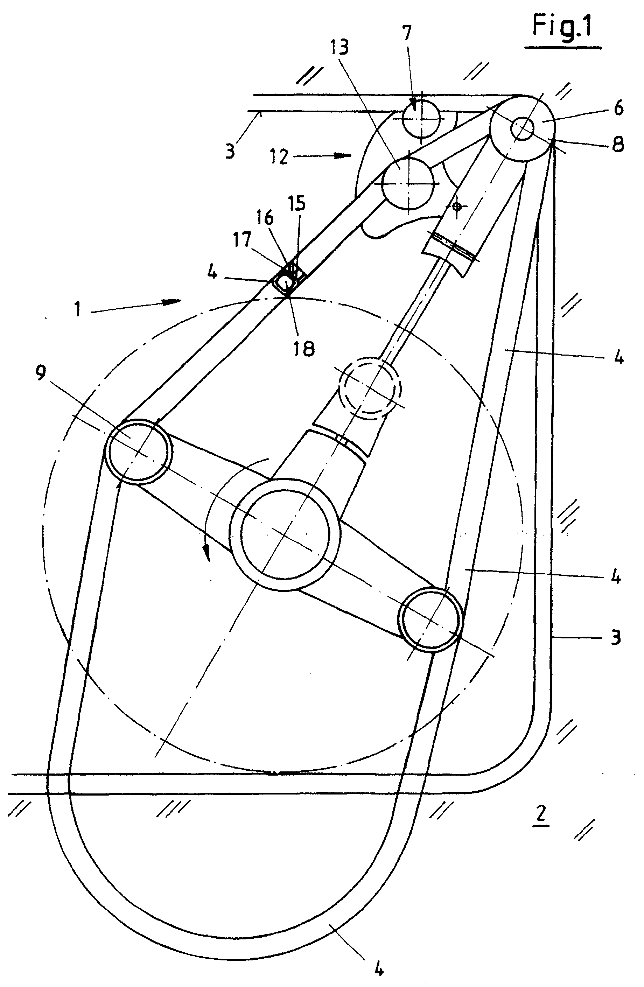

Fig. 1 zeigt eine vereinfacht wiedergegebene Robotereinheit 1, die in der Öffnung einer Karosserie 2 verfahrbar bzw. verschwenkbar angeordnet ist und über die ein Dichtprofil 4 auf den Flansch 3 aufgedrückt wird und zwar optimiert so, dass Beschädigungen an Dichtprofil 4 nicht auftreten können.

Die Druckrolle 6 der Robotereinheit 1 ist hierzu eine Flanschabtasteinrichtung 7 vorgeordnet, die dafür sorgt, dass die Druckrolle 6 jeweils in eine Position gebracht wird, dass sie mit Hilfe lediglich ihrer Seitenführungen 8 das Dichtprofil 4 immer genau auf die Kante des jeweiligen Flansches 3 aufdrückt. Über die Umlenkrollen 9, 10 ggf. auch noch eine Führungsrolle 13 wird dabei sichergestellt, dass das hier als endlose Profil vorhandene Dichtprofil 4 schonend und gezielt der Druckrolle 6 zugeführt wird.

In Fig. 1 ist der Ausgangspunkt der Andrückarbeit wiedergegeben, d. h. die Druckrolle 6 ist von der Robotereinheit 1 entsprechend in Position gebracht worden, wozu entweder die noch weiter hinten erläuterte Sensorik dient oder aber vorab ermittelte Stützpunkte, sodass die Robotereinheit 1 nach Erreichen eines der Stützpunkte sofort weiss, wie sie den nächsten Stützpunkt erreichen kann und erreichen soll. Damit ist die Robotereinheit 1 in die Position gebracht, die ein genaues Abfahren der Öffnung in der Karosserie 2 ermöglicht.

Die Flanschabtasteinrichtung 7 und ggf. auch die Führungsrolle 13 sind einer Führungseinheit 12 zugeordnet, über die sie in einer vorgegebenen Position zur Druckrolle 6 gehalten werden können.

Bei dem hier in Rede stehenden Dichtprofil 4 handelt es sich um ein schlauchförmiges Profil, das in Fig. 1 angedeutet ist. Erkennbar ist dort, dass dieses Dichtprofil 4 über einen vom Träger 14 und den nach innen vorstehenden Lippen 15, 16 gebildeten Klemmbereich 17 verfügt. Erkennbar ist auch der eigentliche für die Abdichtung wichtige Dichtschlauch 18.

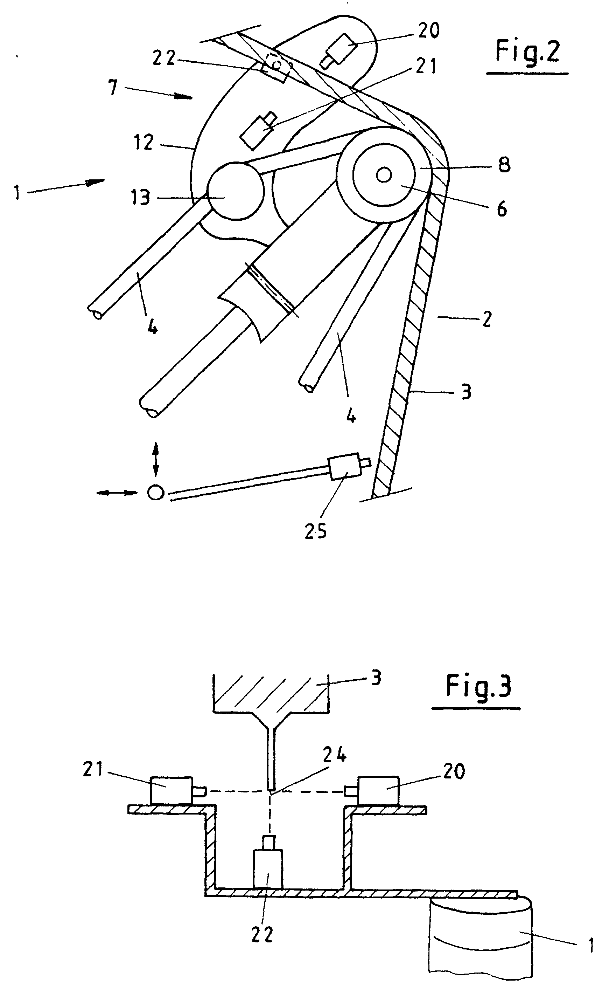

Während in Fig. 1 die Flanschabtasteinrichtung 7 einfach nur angedeutet ist, zeigt Fig. 2 , dass es sich hier um mehrere Laser-Abtastsensoren 20, 21, 22 handelt. Diese Laser-Abtastsensoren 20, 21, 22 sind so positioniert, dass sie die Kante 24 des Flansches 3 genau ermitteln und die entsprechenden Messwerte weitergeben können, sodass die Druckrolle 6 genau geführt werden kann. Es versteht sich, dass es sich bei der Wiedergabe nach Fig. 2 und auch Fig. 3 nur um schematische Zeichnungen handelt, die verdeutlichen sollen, dass durch eine derartige berührungslose Abtastung eine schnelle Abfolge erreichbar ist, ohne dabei an Genauigkeit zu verlieren. Vielmehr sind die Abtastsensoren 20, 21, 22 besonders vorteilhaft, weil sie über einen einstellbaren, exakten Schaltpunkt verfügen, leicht aufgrund ihres sichtbaren Lichtfleckes justiert werden können und darüber hinaus über eine enorm schnelle und exakte Reaktion verfügen.

Fig. 2 zeigt noch ergänzend, dass mit Hilfe eines separaten Sensors die Möglichkeit besteht, die für die Positionierung der Robotereinheit 1 notwendigen Stützpunkte schnell und sicher vorab zu ermitteln, sodass die Robotereinheit 1 sofort in ihre Arbeitsposition gebracht und entsprechend eingesetzt werden kann.

Vorteilhaft ist beim beschriebenen Verfahren und der erfindungsgemäßen Vorrichtung, dass auch bei geschlossenen Dichtprofilen 4 ohne Gefährdung immer genau über die Druckrolle 6 dieses Dichtprofil 4 optimal auf den Flansch 3 aufgeformt werden kann. Ein ungenauer Sitz würde zu Undichtigkeiten führen und zu Beschädigungen, was durch die Robotereinheit 1 ausgeschlossen ist. Diese Robotereinheit 1 gemäß vorliegender Beschreibung ermöglicht eine sensorgestützte Aufbringung des Dichtprofils 4 mit Hilfe der Druckrolle 6, indem anhand der vorab vorliegenden Stützpunkte die Kontur berührungslos abgefahren wird. Durch Ansprechen der jeweiligen Sensoren wird die Sollbahn der Robotereinheit 1 in die entsprechende Richtung verschoben. Die Flanschabtasteinrichtung 7 und damit auch die Verschiebung der Sollbahn geschieht kontinuierlich während der Bewegung der Robotereinheit 1. Dabei haben Versuche an einem Türausschnitt mit einer Konturlänge von rund 320 mm ergeben, dass die geforderten 100 mm/Sek. Geschwindigkeit problemlos eingehalten werden können. Die abgetastete Strecke betrug 2860 mm und wurde in 26,5 Sek. abgefahren. Die Geschwindigkeit von 100 mm/Sek. wurde bei einer max. durch die entsprechende Abtastung erreichbaren Abweichung von ± 1 mm sicher erreicht. Dies bedeutet, dass ein kompletter Türausschnitt in einer Zeit von unter 30 Sek. abgefahren werden kann, um das Dichtprofil 4 über die Druckrolle 6 auf den Flansch 3 aufzudrücken.

## Patentansprüche

1. Verfahren zum Anbringen von Dichtprofilen auf den Randbereich einer Öffnung, insbesondere eines Profilschlauches auf den Flansch zusammengepresster Karosserieteile eines Kraftfahrzeuges, wobei der Profilschlauch mit seinen innenseitig vorstehenden Lippen auf den Flansch, dessen genaue Kontur unmittelbar vor dem Andrücken gemessen wird, unter Berücksichtigung der Messergebnisse gezielt aufgesteckt und an ihn angeformt wird,
**dadurch gekennzeichnet,**
**dass** zunächst aufgrund der im Computer hinterlegten Sollbahn-Stützpunkte die Lage der Karosserie ermittelt und dann die tatsächliche Kontur zwischen diesen Stützpunkten abgefahren und berührungslos aufgenommen und als Korrekturwert den Solldaten überlagert und die Sollbahn entsprechend verschoben wird, wobei während des Abfahrens der Kontur automatisch neben den Korrekturwerten zusätzliche Stützpunkte durch Einsatz von drei Laser-Abtastsensoren bestimmt werden.

2. Verfahren nach Anspruch 1,
**dadurch gekennzeichnet,**
**dass** die Postition der Öffnung bzw. der Karosserie vorab durch seperate Sensorik ermittelt wird.

3. Verfahren nach Anspruch 1,
**dadurch gekennzeichnet,**
**dass** auch die Position der Werkzeuge, insbesondere der Druckrolle, während des Abtastens kontinuierlich korrigiert wird.

4. Verfahren nach einem der vorhergehenden Ansprüche,
**dadurch gekennzeichnet,**
**dass** die Werte der Konturmessung gespeichert und in die Karosseriefertigung als Korrekturwerte eingeschleust werden.

5. Verfahren nach einem der vorhergehenden Ansprüche,
**dadurch gekennzeichnet,**
**dass** der die Laser-Abtastsensoren und die Montagemechanik der auf einem Transportband angeordneten Karosserie kontinuierlich folgend auf einem verfahrbaren Gestell gelagert werden.

6. Vorrichtung zum Anbringen von Dichtprofilen (4) auf den Flansch (3) von Karosserien (2) zur Durchführung des Verfahrens nach Anspruch 1 - Anspruch 5, mit einer Robotereinheit (1), die entlang des Flansches (3) verfahrbar ist und über eine das Dichtprofil (4) beeinflussende Druckrolle (6) und eine dieser vorgeordneten, mit verfahrbaren, elektrisch/elektronischen Flanschabtasteinrichtung (7) verfügt,
**dadurch gekennzeichnet,**
**dass** die der Robotereinheit (1) zugeordnete Flanschabtasteinrichtung (7) von drei Laser-Abtastsensoren (20, 21, 22) gebildet ist, die mit der Auswerteinheit und die wieder mit der Robotereinheit (1) und deren Druckrolle (6) steuerungsmäßig verbunden ist.

7. Vorrichtung nach Anspruch 6,
**dadurch gekennzeichnet,**
**dass** der Flanschabtasteinrichtung (7) und/oder der Robotereinheit (1) ein die Korosserieposition ermittelnder seperater Sensor (25) zur Taktzeitoptimierung zugeordnet ist.

8. Vorrichtung nach einem der vorhergehenden Ansprüche,
**dadurch gekennzeichnet,**
**dass** einer der Laser-Abtastsensoren (22) als Lichtschranke die Kontur des Flansches (3) senkrecht abtastend ausgebildet und angeordnet ist.

9. Vorrichtung nach einem der vorhergehenden Ansprüche,
**dadurch gekennzeichnet,**
**dass** die Robotereinheit (1) mit dem die Karosserie (2) mitnehmenden Transportband und an diesem längsverfahrbar ausgebildet ist.

10. Vorrichtung nach einem der vorhergehenden Ansprüche,
**dadurch gekennzeichnet,**
**dass** die Robotereinheit (1) eine Druckrolle (6) mit Seitenführung (8) für das Dichtprofil (4) aufweist, der lediglich das Umschlingen der Druckrolle (6) sichernde Umlenkrollen (9, 10) zugeordnet sind.

## Claims

1. Method for applying self-sealing profiles to the edge region of an opening, in particular a profile tube to the flange of pressed-together body parts of a motor vehicle, the profile tube being purposefully placed and moulded thereon while taking into account the measured results, with its inwardly projecting lips on the flange, the exact contour of which is measured immediately before pressing-on, **characterised in that** initially the position of the vehicle body is ascertained on the basis of the desired path support points stored in the computer and then the actual contour between these support points is traversed and recorded without contact and superimposed on the desired data as a correction value and the desired path displaced accordingly, additional support points in addition to the correction values automatically being determined during traversing of the contour owing to the use of three laser scanning sensors.

2. Method according to claim 1, **characterised in that** the position of the opening or the vehicle body is determined in advance by separate sensor devices.

3. Method according to claim 1, **characterised in that** the position of the tools, in particular the pressure roller, is also continuously corrected during scanning.

4. Method according to any of the preceding claims, **characterised in that** the values of the contour measurement are stored and transferred into vehicle body manufacture as correction values.

5. Method according to any of the preceding claims, **characterised in that** the laser scanning sensors and the assembly mechanism of the vehicle body arranged on a conveyor belt are mounted in a continuous succession on a moving stand.

6. Device for attaching sealing profiles (4) to the flange (3) of vehicle bodies (2) to carry out the method according to claim 1 to claim 5, with a robot unit (1) which is movable along the flange (3) and has a pressure roller (6) influencing the self-sealing profile (4) and a concurrently movable, electric/electronic flange scanning device (7) arranged upstream of the roller, **characterised in that** the flange scanning device (7) associated with the robot unit (1) is formed by three laser scanning sensors (20, 21, 22), the device being connected in control terms to the evaluation unit and again to the robot unit (1) and the pressure roller (6) thereof.

7. Device according to claim 6, **characterised in that** a separate sensor (25) for optimising cycle time and determining the vehicle body position is associated with the flange scanning device (7) and/or the robot unit (1).

8. Device according to any of the preceding claims, **characterised in that** one of the laser scanning sensors (22) is designed and arranged as a light barrier to perpendicularly scan the contour of the flange (3).

9. Device according to any of the preceding claims, **characterised in that** the robot unit (1) is formed with the conveyor belt entraining the vehicle body (2) and is movable along the length thereof.

10. Device according to any of the preceding claims, **characterised in that** the robot unit (1) has a pressure roller (6) with a lateral guide (8) for the self-sealing profile (4) associated only with return rollers (9, 10) ensuring looping of the pressure roller (6).

## Revendications

1. Procédé pour monter des profilés d'étanchéité dans la zone du bord d'une ouverture, notamment pour installer un tuyau profilé sur la bride de parties de carrosserie, réunies par serrage, d'un véhicule automobile, le tuyau profilé étant emmanché de façon ciblée par ses lèvres, qui font saillie vers le côté intérieur, sur la bride, et étant conformé sur cette bride dont le contour exact a été mesuré immédiatement avant le serrage, compte tenu des résultats de mesure, **caractérisé en ce qu'**on détermine tout d'abord la position de la carrosserie sur la base des points d'appui de trajectoire de consigne mémorisés dans un ordinateur, et qu'ensuite on parcourt et on enregistre sans contact le contour effectif entre ces points d'appui et on les superpose, en tant que valeur de correction, aux données de consigne et on décale de façon correspondante la trajectoire de consigne, auquel cas pendant le suivi du contour, on détermine automatiquement des points supplémentaires d'appui, en dehors des valeurs de correction, moyennant l'utilisation de trois capteurs d'exploration à laser.

2. Procédé selon la revendication 1, **caractérisé en ce que** la position de l'ouverture ou de la carrosserie est déterminée au préalable par un système de détection séparé.

3. Procédé selon la revendication 1, **caractérisé en ce que** la position des outils, notamment du galet de pression, est également corrigée continûment pendant l'exploration.

4. Procédé selon l'une des revendications précédentes, **caractérisé en ce que** les valeurs de mesure du contour sont mémorisées et sont insérées en tant que valeurs de correction dans la fabrication de la carrosserie.

5. Procédé selon l'une des revendications précédentes, **caractérisé en ce que** les capteurs d'exploration par laser et le système mécanique de montage de la carrosserie disposée sur une bande transporteuse sont montés de manière à se suivre continûment sur un châssis mobile.

6. Dispositif pour le montage de profilé d'étanchéité (4) sur la bride (3) de carrosseries (2) pour la mise en oeuvre du procédé selon les revendications 1 à 5, comportant une unité formant robot (1), qui est déplaçable le long de la bride (3) et dispose d'un galet de pression (6), qui agit sur le profilé d'étanchéité (4), et d'un dispositif électrique/électronique (7) d'exploration de la bride, qui est disposé en amont de ce galet et est déplaçable, **caractérisé en ce que** le dispositif (7) d'exploration de la bride, qui est associé à l'unité formant robot (1), est formé par trois capteurs d'exploration à laser (20,21,22), qui sont reliés, de manière à en réaliser la commande, à l'unité d'évaluation et qui à son tour est reliée, de manière à réaliser la commande, à l'unité formant robot (1) et à son galet de pression (6).

7. Dispositif selon la revendication 6, **caractérisé en ce que** le dispositif (7) d'exploration de la bride et/ou l'unité formant robot (1) est contrôlé par un capteur séparé (25) qui détermine la position de la carrosserie et sert à optimiser le temps de cadence.

8. Dispositif selon l'une des revendications précédentes, **caractérisé en ce que** l'un des capteurs d'exploration à laser (22) est agencé et est disposé en tant que rideau de lumière pour explorer perpendiculairement le contour de la bride (3).

9. Dispositif selon l'une des revendications précédentes, **caractérisé en ce que** l'unité formant robot (1) est réalisée de manière à être déplaçable longitudinalement avec la bande de transport entrainant la carrosserie (2) et de manière à être déplaçable longitudinalement le long de cette bande.

10. Dispositif selon l'une des revendications précédentes, **caractérisé en ce que** l'unité formant robot (1) comporte un galet de pression (6) comportant un guide latéral (8) pour le profilé d'étanchéité (4), et auquel sont associés des galets de renvoi (9,10) garantissant simplement l'enroulement autour du galet de pression (6).
